# EUROPEAN PATENT SPECIFICATION

(11) **EP 1 962 538 B1**
(45) Date of publication and mention of the grant of the patent: **08.05.2013**
(21) Application number: 06742123.0
(22) Date of filing: 07.06.2006
(51) Int. Cl.: H04L 12/24, H04L 12/26, H04W 24/00

(54) **METHOD FOR MANAGING TERMINAL DEVICE**
VERFAHREN ZUR VERWALTUNG EINES ENDGERÄTS
PROCEDE DE GESTION DE DISPOSITIF TERMINAL

(30) Priority: 09.12.2005 CN 200510130428
(43) Date of publication of application: 27.08.2008
(73) Proprietor: Huawei Technologies Co., Ltd., Longgang District, Shenzhen Guangdong 518129 (CN)
(72) Inventor: LI, Kepeng, Guangdong 518129 (CN); CHAI, Xiaoqian, Guangdong 518129 (CN); DONG, Xiaoyi, Guangdong 518129 (CN); ZHAO, Guiyu, Guangdong 518129 (CN); HE, Jiangshui, Guangdong 518129 (CN); GAO, Hongtao, Guangdong 518129 (CN); CHENG, Jianzhang, Guangdong 518129 (CN)
(74) Representative: Kreuz, Georg Maria
(86) International application number: PCT/CN2006/001237
(87) International publication number: WO 2007/065326

(56) References cited:
- WO-A-2005/050478
- WO-A1-00/67499
- WO-A1-01/50263
- WO-A1-03/049381
- WO-A2-2004/082214
- CN-A- 1 512 429
- CN-A- 1 624 663
- US-A- 6 125 390
- US-A1- 2005 033 872
- US-A1- 2005 119 020
- US-A1- 2005 172 162
- OMA: "OMA Device Management Protocol Draft Version 1.2 28 Apr 2005 Open Mobile Alliance OMA-TS-DM-Protocol-V1_2_0-20050428-D", INTERNET CITATION, 28 April 2005 (2005-04-28), pages 1-49, XP007904761, Retrieved from the Internet: URL:http://member.openmobilealliance.org/f tp/Public_documents/DM/Permanen t_documents/OMA-TS-DM-Protocol-V1_2_0-2005 0428-D.zip [retrieved on 2008-05-20]

## Description

### FIELD OF THE INVENTION

The present invention relates to the communication field, and in particular, relates to management of equipment resources.

### BACKGROUND OF THE INVENTION

Terminal devices, such as mobile phone terminals, handheld computers, notebook computers, plug-in equipment, vehicle-mounted systems, are all important components of the overall mobile operating service system. Recently, the ever-growing demand for terminal devices with more complete and complex features has also led to the increased probability of generating a whole set of new problems related to terminal devices. To maintain high quality service, as well as provide low-cost and efficient maintenance of the equipment, all service providers and terminal manufacturers are very concerned about technology related to management, diagnosis and maintenance of terminal devices.

In the prior art, there is proposed an approach of management of terminal devices based on a DM system framework, protocol, and communication mechanism defined by OMA (Open Mobile Alliance) DM (Device Management) specification. The principal concept of this approach is as follows: DMS (Device Management Server) sends relevant operation commands, such as Add, Copy, Delete, to MO (Management object) in a management tree stored in the terminal device by using the OMA DM protocol, so as to manage device resources via operation on the management tree.

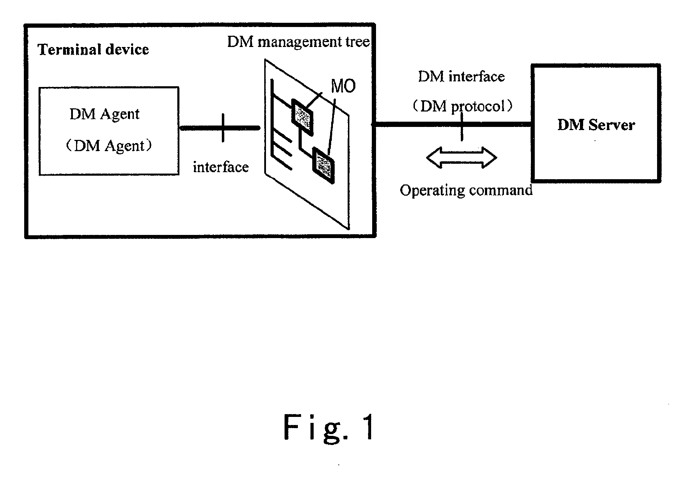

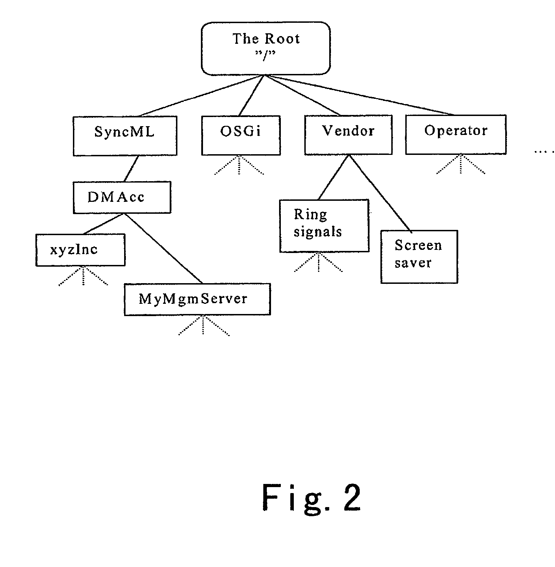

The above approach is based on a DM system framework defined by the OMA DM standard. The framework, as shown in FIG. 1, includes DMS (Device Management Server) and a terminal device on which are provided a DM Agent (DM Agent) and a management tree. The DM Agent is responsible for interpreting the content of the OMA DM protocol, converting the management operation commands sent by the DMS into an executable command by the terminal device, and notifying the terminal device to execute. The management tree organizes all available management objects in the terminal device in the form of a tree-like structure, for example, as shown in FIG. 2. Each management object may contain a set of environment configuration parameters, different types of objects, relevant operations and certain triggering mechanisms, etc.; each of the management objects is identified by a unique URI (Unified Resource Identity).

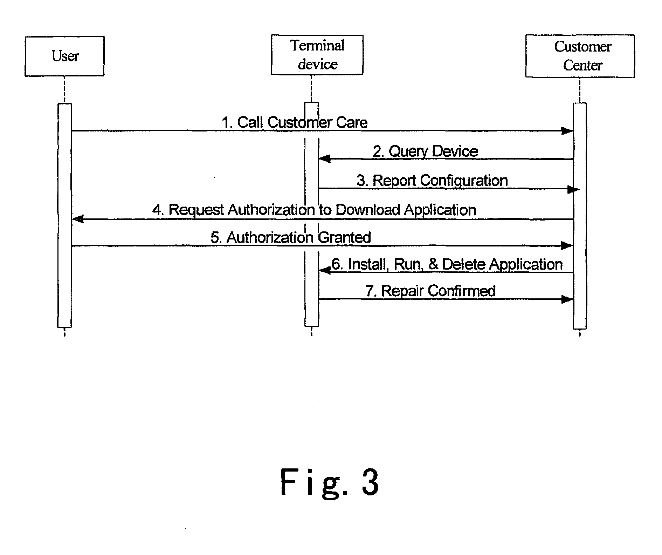

Based on the DM system framework, a management process of a terminal device such as error detection, diagnosis, and remedy by means of a Device Management server (DMS), is shown in Fig. 3, which includes the following:

Step 1: A user calls the Customer Center of the service provider to report failure of the terminal device;

Step 2: The Customer Center inquires into the terminal device reported by the user through the DMS;

Step 3: The terminal device reports its relevant configuration information to the DMS; the DMS diagnoses the configuration information and selects an appropriate application program based on the diagnosis;

Step 4: The DMS requests the user for authorization, and inquires of the user about whether or not it is necessary to download an application;

Step 5: User grants the authorization;

Step 6: DMS instructs the terminal device to install, run, and then delete the application, the terminal device performs remedy operations according to the application instructed by DMS;

Step 7: The terminal device sends confirmation information to DMS that the failure has been remedied.

With the above approach, the user must request the Customer Center for assistance when the terminal device encounters a problem. Certain terminal-related events, for example, modification of certain operational parameters of the terminal device; download and installation of some new software via non-DM way (through Website, WAP site, etc.) on the terminal device; or modification of parameter settings on the terminal device by certain applications resided thereon, etc. are critical to device management. If a device management system is capable of monitor terminal events, failures can be avoided in advance. For example, when a user attempts to modify an operational parameter into a wrong value, a terminal monitoring program can alert the user that such a modification can render the operation unusable; or when a user installs new software, the terminal monitoring program can report this event to the device management system for future management. Therefore, it is desired to manage the terminal device by monitoring terminal events, in order to prevent and timely eliminate the adverse impact of terminal events on the terminal devices.

US 2005/172162 Al discloses an operation management method. In D1, an operation management server collects event records from a plurality of target objects being monitored, where the target objects are a plurality of functions executed on the server. Subsequently a troubleshooting record is extracted according to comparing an event group with a plurality of pattern definition groups in terms of occurrence patterns of event records.

WO 2005/050478 A discloses a terminal comprising means for detecting a change in the capabilities of the terminal, and means for transmitting information on the change of the terminal capabilities to the device management server

US-A-6 125 390 discloses a system for controlling a plurality of workstations in a network. In D3, the system comprises means for identifying an event occurring with respect to a program executing on one of said workstations; means in one of said workstations for sending an alert to a management console which identifies said event; and means for sending said at least one procedure from said management console to an agent module resident on said workstation in response to receipt of said alert.

### SUMMARY OF THE INVENTION

The purpose of the present invention is to provide a method and a system for management of a terminal device. With the present invention, it is possible to monitor terminal events, perform management of the terminal device based on monitored terminal events. The invention is defined by the method of claim 1 and the system of claim 7.

It is clear from the technical solutions according to the present invention that the present invention monitors and acquires the event offline occurring in the terminal device, and a management side manages the terminal device based on the monitored event. With the present invention, it is possible to monitor terminal event and perform management on the terminal device based on the monitored terminal event. Thus, it may prevent and timely eliminate the adverse impact of terminal event on the terminal devices.

### BRIEF DESCRIPTION OF THE DRAWINGS

FIG. 1 illustrates a framework of the DM system provided by the existing technology;

FIG. 2 illustrates a tree-like structure of a management tree provided by the existing technology;

FIG. 3 illustrates a flowchart of management of DMS in the terminal device;

FIG. 4 illustrates a system framework according to a first embodiment of the present invention;

FIG. 5 illustrates a configuration of the monitor engine according to the first embodiment;

FIG. 6 illustrates a flowchart of management according to a second embodiment of the present invention;

FIG. 7 illustrates a structure of a sub-tree configured when performing installation of monitor task according to the second embodiment of the present invention.

FIG. 8 illustrates a structure of a sub-tree for monitoring usage of applications according to the second embodiment of the present invention.

FIG. 9 illustrates a flowchart that shows the terminal device monitoring the terminal event by querying a list of applications according to the second embodiment of the present invention;

FIG. 10 illustrates a flowchart that shows the terminal device monitoring the terminal event by querying a system log according to the second embodiment of the present invention;

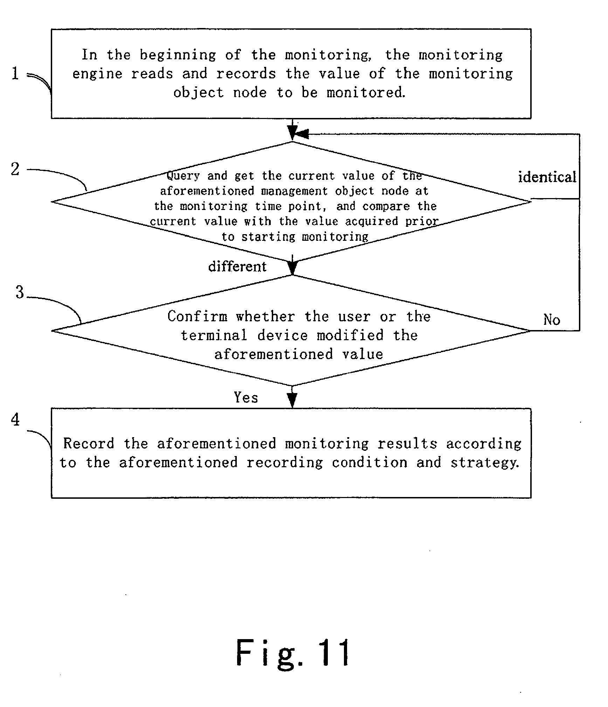

FIG. 11 illustrates a flowchart according to a third second embodiment of the present invention,

FIG. 12 illustrates a flowchart according to a fourth embodiment of the present invention.

### DETAILED DESCRIPTION OF THE INVENTION

Normally, a device management system is capable of carrying out many management operations on a mobile terminal. At the same time, a user may perform certain offline operations on the mobile terminal. An application in the terminal is also capable of performing certain operations on the terminal. Certain offline events on the terminal include, but are not limited to, the follow scenarios:
1. The user modifies the operation parameter on the terminal device;
2. The user manually installs firmware upgrade kits without interacting with the management side;
3. The user downloads new software through non-DM way (for example Website, WAP site, etc.) and installs it to the terminal device, or updates the original application on the terminal device with the downloaded one;
4. The applications whi ch are installed on the terminal modify certain parameter settings;
5. Usage Information of the applications on the terminal device.

The DMS needs to acquire relevant information of these offline events in order to manage the firmware/software on the terminal device. Such relevant information includes: the firmware/software information that the user downloaded and installed offline through non-DM method, the offline modification information of the management object and parameters of the terminal device.

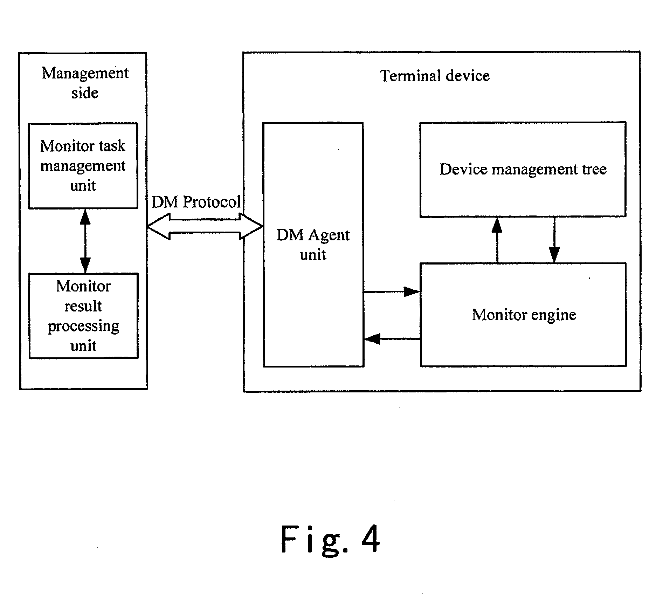

According to a first embodiment, there's provided a system of managing a terminal device, as shown in FIG. 4, including a management side and the terminal device, the management side includes a monitor task management unit and a monitor result processing unit. The terminal device includes a monitor engine, a DM Agent unit, and device management tree.

The management side interacts with the DM Agent unit in the terminal device via a DM protocol, and manages management objects in the DM tree via the interacted information.

When interacting with the terminal device, the management side issues a monitoring task to the terminal device via the monitor task management unit. The DM Agent unit of the terminal device receives the monitoring task and transmits the task to the monitoring engine. The monitoring engine allocates a corresponding monitoring policy, such as monitored event items, monitoring result recording condition, and monitoring result report condition, according to the monitoring task. Then, the monitoring engine acquires events occurring in the terminal device based on the monitored item, through the logs recorded in the system and a list of applications. Next, the monitoring engine removes the events generated via the DMS mode among all the events, and reports the corresponding events to the management side based on the reporting condition. The monitoring result processing unit of the management side performs the corresponding process to the monitoring result, and performs management of the terminal device based on processed information, for example, parameter allocation, error diagnosis, and firmware/software upgrade, etc.

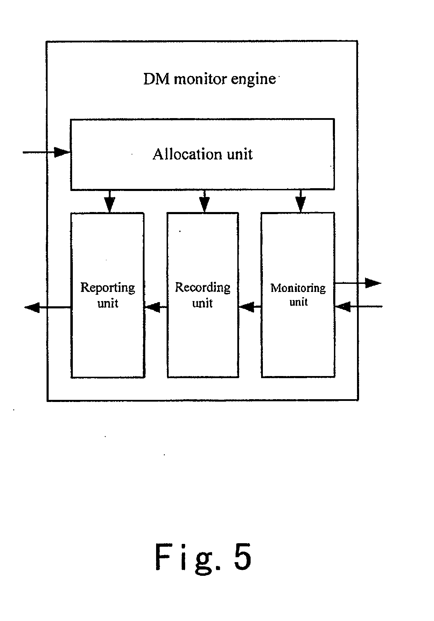

The monitoring engine includes an allocation unit, a monitoring unit, a recording unit, and a reporting unit, for monitoring the terminal events, as shown in Fig. 5.

After the monitoring engine receives the monitoring task, the allocation unit allocates corresponding monitoring policy such as monitored event items, recording condition and/or reporting condition etc. Then the monitor items are transferred to the monitoring unit, the recording condition is transferred to the recording unit, and the reporting condition is transferred to the reporting unit.

The monitoring unit monitors events generated in the terminal device based on the monitored event items. For example, when a monitored item appoints to monitor offline parameters, then the monitoring unit monitors the offline parameter in the terminal device, when the monitored item appoints to monitor whether the system is to download new applications, then the monitoring unit monitors the new application download in the terminal device via the non-DM mode. When the monitoring unit monitors the event generated in the terminal device, it transfers the relevant information about the event to the recording unit;

The recording unit records the monitoring events based on the recording condition received. For example, if the user modifies an offline parameter, then it is needed to determine whether the parameter is within an acceptable range, i.e., whether or not it meets the recording condition. If it meets the recording condition, then the recording unit records the relevant information about the event, and then transfers the information record to the reporting unit.

The reporting unit reports the received information based on the received reporting condition. At this time, the reporting unit first determines whether the event-related information meets the reporting condition; if the information meets the reporting condition, the reporting unit then reports the information to the management side. If the information is not a concern to the management side, that is, it does not meet the reporting condition, then the reporting unit discards the event-related information and no longer reports it to the management side.

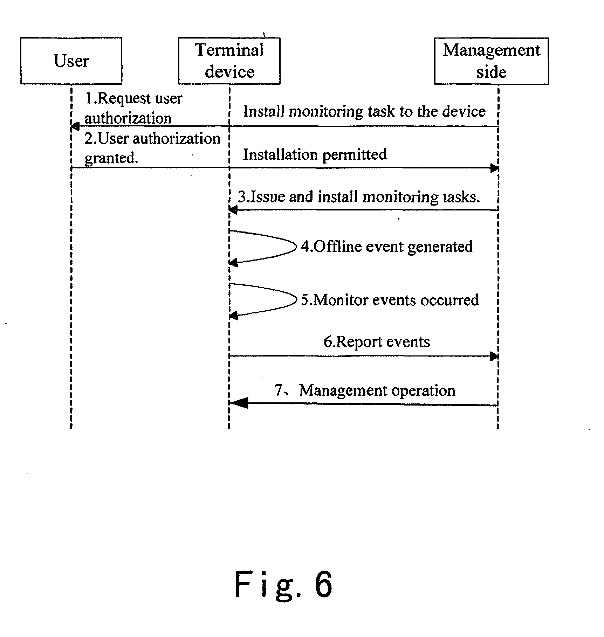

A second embodiment provides a method of managing a terminal device. The main concept behind this embodiment is as follows: when the terminal device is properly configured and is capable of interacting with the management side, the terminal device monitors the events such as new installation and update of an application based on the monitoring task issued by the management side, reports the monitoring result to the management side. The management side then manages the terminal based on the monitoring result. The detailed implementation process is shown in FIG. 6, including:

Step 1: The management side requests the user to grant authorization for issuing a monitoring task on the terminal device;

Step 2: When the user needs monitoring the terminal device, then he grants authorization permitting the management side to issue the monitoring task;

Step 3: The management side issues the monitoring task to the terminal device and installs it on the terminal device.

The monitoring task includes: a number of appointed monitored event items, recording conditions and strategies and/or reporting conditions and strategies.

The monitored event items include monitoring whether or not the terminal device downloads a new application and the terminal device has installed or updated the original applications with new ones and so on.

The recording conditions and strategies refer to particular conditions in which the terminal device records the corresponding events. For example, the terminal device records the terminal events monitored according to a preset time or according to a specified time interval.

The reporting conditions and strategies refer to particular conditions in which the terminal device reports corresponding events. For example, it shall report the monitored event in real-time once occurred, at a certain predetermined time, or the reporting time shall be determined according to the severity and urgency of the event, etc.

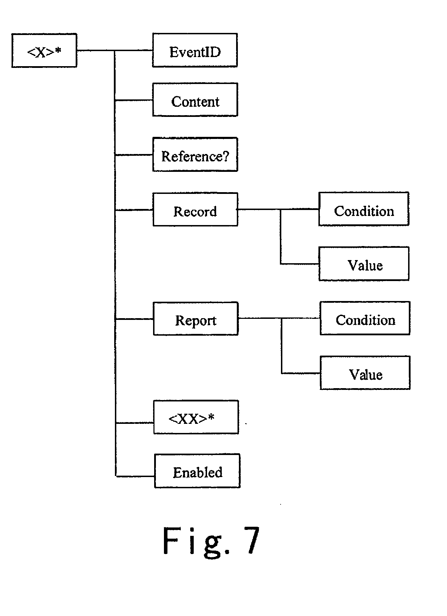

When installing the monitoring task, in order to facilitate the DMS's issuing and installing the monitoring task, a sub-tree is provided in the DM tree of the terminal device. The structure of the sub-tree, as shown in FIG. 7, includes a X node and EventID node under the X node, Content node, Reference node, Record node, Report node and Enabled node and XX node, wherein a Record/Condition node and a Record/Value node or the like are set under the Record node, and a Report/Condition node and a Report/Value node or the like are set under the Report node. All the nodes under the XX node are used to monitor and record management objects such usage information on the applications in the terminal device.

The structure and usage of each node contained in the sub-tree are described below.

X node is a placeholder of the monitored event item. The sub-nodes under this node describe the relevant information about the monitored event item. The configuration is shown in the following Table 1:

**Table 1**

| Tree node | Format | Access permission |
|---|---|---|
| One or more | Node | Get |

EventID node is used for storing identify information of an event, and its configuration is shown in Table 2.

**Table 2**

| Tree node | Format | Access permission |
|---|---|---|
| One | Chr | Replace, Get |

The Content node is used to store the content of the monitored event item and specify the contents that need monitoring. The configuration is as shown in Table 3.

**Table 3**

| Tree node | Format | Access permission |
|---|---|---|
| One | Chr | Replace, Get |

Reference node is used to store reference values for the monitored event items, such as the monitoring parameters, and the reference value of this parameter may be stored for future comparison. Its configuration is shown in Table 4.

**Table 4**

| Tree node | Format | Minimum Access permission |
|---|---|---|
| One or Zero | Chr | Replace, Get |

Record node is used to record events monitored and generated in the terminal device. Its configuration is shown in Table 5.

**Table 5**

| Tree node | Format | Minimum Access permission |
|---|---|---|
| One | Node | Replace, Get |

Record/Condition node is used to store the recording condition for the monitored event items. Its configuration is shown in Table 6.

**Table 6**

| Tree node | Format | Minimum Access permission |
|---|---|---|
| One | Chr | Replace, Get |

Record/Value node is used to store data for recording the monitored event items. Its configuration is shown in Table 7.

**Table 7**

| Tree node | Format | Minimum Access permission |
|---|---|---|
| One | Chr | Replace, Get |

Report node is used to report the monitored event items. Its configuration is shown in Table 8.

**Table 8**

| Tree node | Format | Minimum Access permission |
|---|---|---|
| One | Node | Replace, Get |

Report/Condition node is used to store the reporting condition. Its configuration is shown in Table 9.

**Table 9**

| Tree node | Format | Minimum Access permission |
|---|---|---|
| One | Chr | Replace, Get |

Report/Value node is used to store the data of the reported monitoring result. Its configuration is shown in Table 10.

**Table 10**

| Tree node | Format | Minimum Access permission |
|---|---|---|
| One | Chr | Replace, Get |

Enabled node is used to enable and disable the monitoring, and its value is True or False. Its configuration is shown in Table 11.

**Table 11**

| Tree node | Format | Minimum Access permission |
|---|---|---|
| One | Bool | Replace, Get |

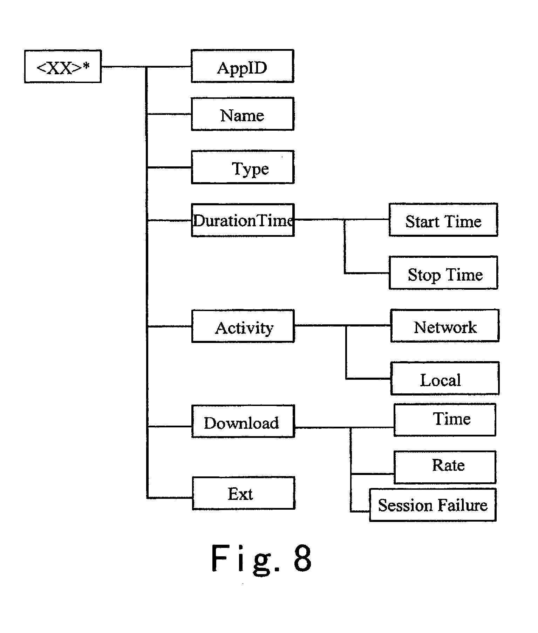

The configuration of XX node is shown in Fig. 8, including XX node and management objects under the XX node such as AppID node, Name node, Type node, Duration Time node, Activity node, Download node, Download Time node, Download/Rate node, Download/Session Failure node and Ext node. Beneath the Duration time node there is provided a Duration Time/Start Time node and a Duration Time/Stop Time node and other management objects. Beneath the Activity node there is provided an Activity/Network node and an Activity/Local node and other management objects. Beneath the Download node there is provided a Download/Time node, a Download/Rate node and a Download/Session Failure node and other management objects.

The configuration and usage of each node is illustrated in details below.

XX node is a placeholder of the monitored item relating to the usage of applications. Sub-nodes under the XX node describe relevant information on the even-monitored item. The configuration of the XX node is shown in table 12:

**Table 12**

| Tree node | Format | Access permission |
|---|---|---|
| One or more | Node | Get |

AppID node is used for storing identify information of the applications, and its configuration is shown in Table 13.

**Table 13**

| Tree node | Format | Access permission |
|---|---|---|
| One | Chr | Replace, Get |

The Name node is used to store the name information on an application, and its configuration is as shown in Table 14.

**Table 14**

| Tree node | Format | Access permission |
|---|---|---|
| One | Chr | Replace, Get |

Type node is used to store type information on an application and its configuration is shown in Table 15:

**Table 15**

| Tree node | Format | Minimum Access permission |
|---|---|---|
| One or Zero | Chr | Replace, Get |

Duration Time node is used to monitor the usage time of an application and its configuration is shown in Table 16:

**Table 16**

| Tree node | Format | Minimum Access permission |
|---|---|---|
| One | Node | Replace, Get |

Duration time/Start time node is used to store start time of an application and its configuration is shown in Table 17.

**Table 17**

| Tree node | Format | Minimum Access permission |
|---|---|---|
| One | Chr | Replace, Get |

Duration time/Stop time node is used to store stop time of an application and its configuration is shown in Table 18:

**Table 18**

| Tree node | Format | Minimum Access permission |
|---|---|---|
| One | Chr | Replace, Get |

Activity node is used to monitor an application, which is active locally or over a network. Its configuration is shown in Table 19:

**Table 19**

| Tree node | Format | Minimum Access permission |
|---|---|---|
| One | Node | Replace, Get |

Activity/Network node is used to store network activity information of the application, such as connection state to the network, and its configuration is shown in Table 20.

**Table 20**

| Tree node | Format | Minimum Access permission |
|---|---|---|
| One | Chr | Replace, Get |

Activity/Local node is used to store local activity information of the application and its configuration is shown in Table 21:

**Table 21**

| Tree node | Format | Minimum Access permission |
|---|---|---|
| One | Chr | Replace, Get |

Download node is used to monitor download information of an application and its configuration is shown in Table 22.

**Table 22**

| Tree node | Format | Minimum Access permission |
|---|---|---|
| One | Node | Replace, Get |

Download/Time node is used to store download time of the application and its configuration is shown in Table 23.

**Table 23**

| Tree node | Format | Minimum Access permission |
|---|---|---|
| One | chr | Replace, Get |

Download/Rate node is used to store download rate of the application and its configuration is shown in Table 24:

**Table 24**

| Tree node | Format | Minimum Access permission |
|---|---|---|
| One | Chr | Replace, Get |

Download/Session Failure node is used to store session failure information during downloading the application and its configuration is shown in Table 25:

**Table 25**

| Tree node | Format | Minimum Access permission |
|---|---|---|
| One | Chr | Replace, Get |

Ext node is used for extension and its configuration is shown in Table 26:

**Table 26**

| Tree node | Format | Minimum Access permission |
|---|---|---|
| One | Node | Replace, Get |

Based on the sub-tree, the management side may use a Replace command to issue and install the monitoring task on the DM tree of the terminal device. Further, the terminal device can monitor the installed or updated application by using monitored event items of the application, and record the monitored event item in the X management tree.

Step 4: Offline event occurs in the terminal device.

When the user performs certain offline operations on the terminal device, e.g., downloads and installs firmware/software (applications) on the terminal device through non-DM mode, the user may modify certain operation parameters on the terminal, or the applications installed on the terminal device modifies setting parameters on the terminal device. These operations may cause the occurrence of offline events.

Step 5: The terminal device monitors occurrence of a terminal event based on a desired monitored event item, and reports the monitoring result through corresponding nodes in the management tree according to the recording condition and strategy.

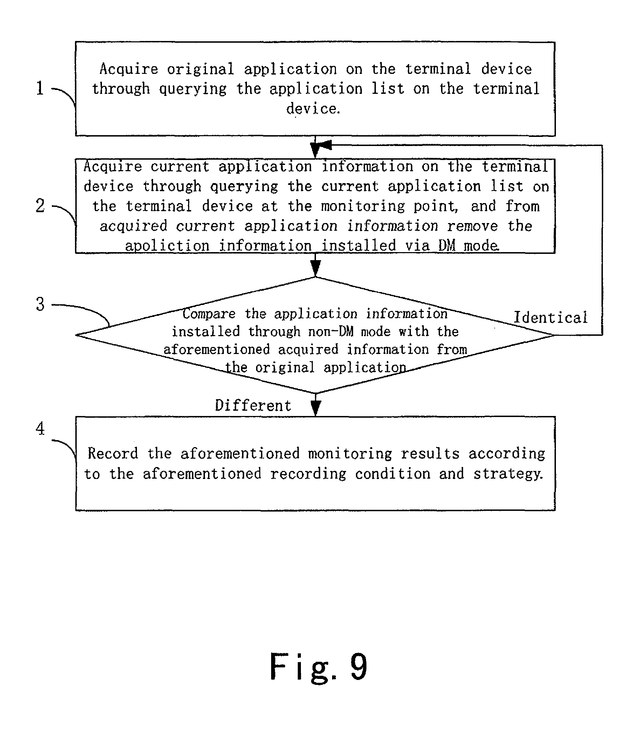

In Step 5, when the event generated in the terminal device is the installation or update of an application in the terminal device through non-DM mode, the terminal device acquires the newly installed or updated application information in the terminal device by querying and analyzing a system log or a list of system applications at a preset event information collecting point, or acquires the newly installed or updated application information in the terminal device through reception of messages reported in real-time by a firmware at a lower layer, wherein

when the terminal device acquires the newly installed application information in the terminal device by querying the list of system applications, the monitoring process of the terminal device includes, as shown in Fig. 9,

Step 1: acquiring original application information on the terminal device through querying the application list;

Step 2: at a monitoring point, acquiring current application information on the terminal device by querying the current list of applications on the terminal device; and removing from the acquired current application information the information on applications installed via the DM mode;

Step 3: Comparing to the acquired original application information the application with the information removed. If both are identical to each other, then the process proceeds with step 2; otherwise goes to step 4.

Step 4: Record the monitoring result according to the recording condition and policy.

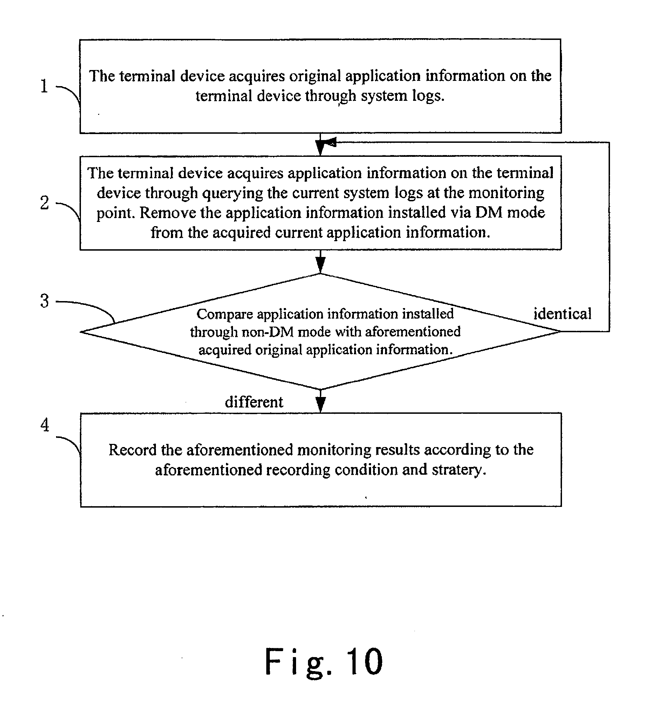

Additionally, the terminal device acquires the newly installed application information in the terminal device by querying a system log. The monitoring process of the terminal device includes, as shown in Fig. 10:

Step 1: acquiring the original application information on the terminal device through system logs.

Step 2: acquiring current application information on the terminal device through querying the current system log at the monitoring point, and then removing the information on applications installed via the DM mode from the acquired current application information.

Step 3: Compare the acquired original application information to the application information with application information installed via DM mode removed. If both are identical to each other, then the process proceeds with step 2, otherwise goes to step 4.

Step 4: Recording the monitoring result according to the recording condition and policy.

If the terminal event needs monitoring in real-time, two approaches are available:

According to the first approach, there's provided a function interface of recording event in the monitoring engine of the terminal device. When the terminal receives the monitoring task, the monitoring engine registers this function interface with a lower level firmware of the system. Thereby, the lower level firmware automatically invokes the registered function interface, when an event occurs, to complete the monitoring and recording of the event.

According to the second approach, an event message handling function is defined in the monitoring engine of the terminal device. When the terminal device receives a monitoring task, the monitoring engine registers the message handling function in a lower level firmware of the system, and associates the event message with the handling function. After an event occurs in the terminal device, the lower level firmware will generate a corresponding event message and transmit the same to the terminal device. In accordance with the association, the monitoring engine in the terminal device receives the message via the message handling function and processes the message to complete the monitoring and recording of the event.

By undergoing Step 5, the monitoring and recording of the application downloaded in the terminal device will be completed, and the process proceeds with the following steps:

Step 6: The terminal device reports the monitoring result to the management side according to the reporting condition and policy.

After the terminal device records the monitoring result, based on the reporting policy/condition, reports the monitoring result to the management side via the Generic Alert message. The Alert message contains the following information: integer return code, URI of data source, Alert type, and Correlator. The Alert type information can be defined as: "org.openmobilealliance.dm.monitoring.report (a monitoring report based on device management of open mobile alliance)."

Step 7: The management side manages the terminal device based on the reporting result.

After the management side receives the message reported by the terminal device, it learns about the monitoring result based on the Alert type information in the message. Thereby, it obtains the information of applications that are downloaded via the non-DM mode, and records the relevant information on the applications installed on the terminal device for later management operation, such as addition of the application installed offline to the management tree of the terminal device, or update of the corresponding information of the management objects in the management tree of the terminal device. If the management side does not receive the Alert type information, then it will not confirm the content reported by the terminal device.

A third embodiment according to the present invention provides a second method of managing a terminal device. The principle concept of the second method is to monitor the management object nodes by monitoring the management tree of the terminal device. The second method, as shown in FIG. 6, includes the following steps:

Step 1: The management side requests the user to grant authorization to issue a monitoring task to the terminal device;

Step 2: When the user needs monitoring the terminal device, then he grants the authorization, that is, permits the management side to issue the monitoring task;

Step 3: The management side issues the monitoring task to the terminal device and installs the task on the terminal device.

The monitoring task includes the following: a number of appointed monitored event items, recording condition and policy and/or reporting condition and policy. The contents of the items and policy are the same as the second embodiment.

Step 4: Offline event occurs in the terminal device;

Step 5: The terminal device monitors the occurrence of terminal events based on a desired monitored event item, and records monitoring result according to the recording condition and strategy.

During the DM process, applications (including firmware and software), parameters and some basic terminal device information are stored in a device management tree in a form of management object (MO). Therefore, when the events generated in the terminal device belong to the monitored event items like that the user or applications in the terminal device modifies offline the values and properties of management objects in the DM tree of the terminal device, it only needs monitoring the management tree. The process of monitoring the management tree includes two scenarios:

The first scenario is that the terminal device obtains the change information of the value and properties of a management object node in the terminal device by collecting and analyzing the value and properties of the management object node at a preset collecting point. A corresponding process, as shown in FIG. 10, includes the following:

Step 1: At the beginning of the monitoring, reading and recording the value of the management object node to be monitored by the monitoring engine;

Step 2: querying and obtaining the current value of the management object node at the monitoring time point, based on the allocated recording condition and policy in the monitoring task; comparing the current value with the value acquired at the beginning of the monitoring process. If both values are different, then the process proceeds with Step 3; otherwise goes to Step 2;

Step 3: verifying whether it is the user or the terminal device that modifies the values. If the user or the terminal device modifies the values, then the process proceeds with Step 4, that is, recording the monitoring result based on the preset recording condition and policy. If it is the DMS that modifies the value of the management object node during monitoring, then the parameter modification is ignored and then goes to Step 2.

The second scenario is to acquire change information on the value and properties of the management object node in the terminal device, by receiving messages reported in real-time from the firmware. Under such circumstances, it is necessary to provide a specific function in the DM Agent of the terminal device, in order to process the MO modification operation exclusively. Through reloading this function, when the DM Agent modified MO nodes to be monitored, the DM Agent is enabled to report the modification to the monitoring engine and then record the relevant information for the purpose of real-time monitoring.

After undergoing step 5, the terminal device records the monitoring result, then executes the following steps:

Step 6: The terminal device reports the monitoring result to the management side based on the reporting condition and policy. The details are the same as the second embodiment, and detailed description is omitted.

Step 7: The management side performs management on the terminal device based on the reporting result.

After receiving the message reported by the terminal device, the management side learns about the monitoring result based on the Alert type information in the message. The management side then acquires the value of the management object in the terminal device based on the Alert message reported by the terminal device, and updates the value of the corresponding management object recorded in advance. If the management side does not obtain an Alert type message, then it does not confirm the content reported by the terminal.

A fourth embodiment according to the present invention provides a third method of managing terminal device. The principal concept of the fourth embodiment is to implement terminal device management through monitoring of offline parameter modification. Many connection parameters and operation parameters in the terminal device are saved as management objects in the DM tree. Monitoring these parameters may be implemented by monitoring management object nodes. For those parameters not stored in the DM tree, the monitoring process is similar to the monitoring process of monitoring management object nodes. However, it is more complicated for the monitoring engine to access the parameters not stored in the DM tree, for example, by invoking a firmware at the lower level or using interfaces provided by other enabled components which depends on the terminal device.

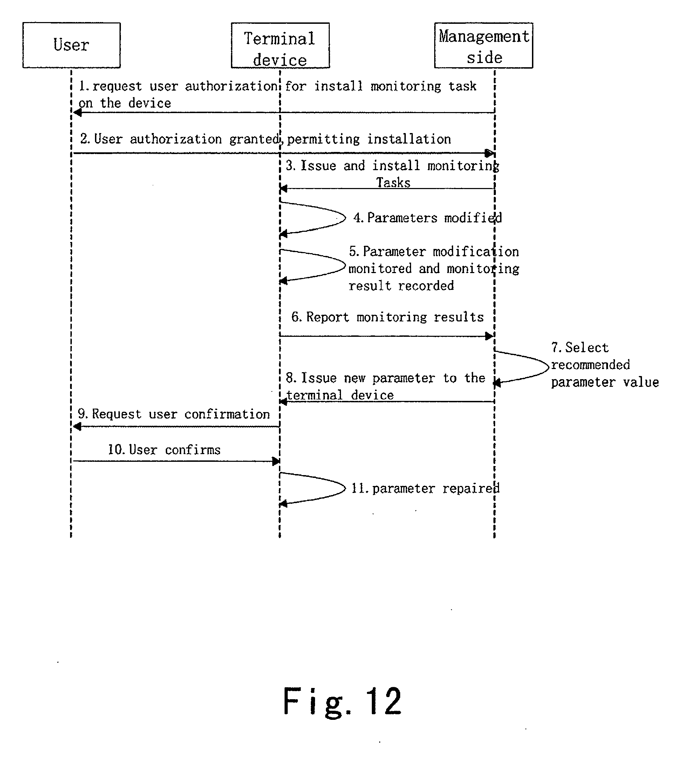

The method of the forth embodiment, as shown in FIG. 12, includes the following:

Step 1: The management side requests the user to grant authorization for issuing a monitoring task to the device;

Step 2: The user authorizes if monitoring is necessary. That is, the user permits the management side to issue the monitoring task;

Step 3: The management side issues the monitoring task to the terminal device, and allocates it on the terminal device.

In the present embodiment, step 3 differs from the corresponding description of the second embodiment in that the monitoring task not only includes the appointed monitored event items, the recording condition and policy and/or reporting condition/policy, but also include a severity level, for example, Critical, Important, and Normal, set to the service parameters or operation parameters in the terminal device. The management side executes different management strategy according to the different severity levels of the parameters. For instance, if the parameter monitored by the management side is Normal, then no management operation is performed, which allows the modification made by the user to the parameter. If the parameter reported by the terminal is Critical, then, once the management side monitors change of the parameters, it immediately issues a new parameter to remedy the modified parameter. If the parameter of the terminal is Important, then, when the management side monitors change of the parameters, it may determine whether to remedy the change, depending on the circumstances. For example, it issues a new remedy parameter at a certain time point, or remedies this service parameter when the terminal device uses it.

Step 4: The Offline allocation parameter in the terminal device is modified.

The allocation parameter of the terminal device may be modified by a user or a certain application in the terminal device.

Step 5: Based on a monitored item, the terminal device monitors and acquires that the offline parameter in the terminal device is modified. It then records the monitoring result according to the recording condition and policy. Meanwhile, the terminal device may execute other management operations, such as alert the user that such modification to the parameter may cause some inconvenience.

In step 5, when the monitored item monitored by the terminal device is the offline modification of allocation parameters in the terminal device by the user or the application in the terminal device, the monitoring process includes two scenarios:
The first scenario is that the terminal device collects and analyzes allocation parameters at the preset event information collecting point, and acquires the modification information of the allocation parameters in the terminal device.

The second scenario is that the terminal device acquires modification information on operation parameters/allocation by receiving messages reported in real-time by the firmware at the lower level.

Step 6: The terminal device reports the monitoring result to the management side, based on the reporting condition and policy. The details of this step are identical with the relevant description in the second embodiment and thus omitted.

Thereafter, the management side adopts corresponding management policies based on the reporting result, and manages the terminal device based upon the management policies. The details are as follows.

Step 7: The management side determines the corresponding management policy based on the severity level of the parameter, and selects appropriate values of the parameters.

Step 8: The management side issues appropriate values of the parameters to the terminal device.

Step 9: The terminal device requests the user to confirm whether or not to update the modified parameter with the new values issued from the management side.
Step 10: If the user agrees, then the management side sends confirmation message to the terminal device.
Step 11: The terminal device updates the modified parameter with the new parameter values.

The monitoring task in the second, third, fourth and fifth embodiments need not include the reporting condition and policy and thus the management tree does not include the report node and the report/condition node. In this case, after the terminal device monitors occurrence of events, it records the occurrence of the events through the record node of the management tree based on the record condition and policy. The management side acquires the monitoring result of the terminal device through a real-time or periodical query of the recorded event.

In the second, third and forth embodiments, the monitoring task may also only contain a number of monitored event items and thus the management tree only contains EventID node, Content node and Enabled node. In this case, the terminal device is capable of monitoring events by controlling the Enabled node. The management side can acquire the monitoring result of the terminal device through a real-time or periodical query and manage the terminal device based on the monitoring result.

A fifth embodiment of the present invention provides a fourth method of managing a terminal device. The principle concept of the fourth method is that, when the monitored event item is the usage information of applications in the terminal device, the monitoring of the management object nodes is realized by monitoring the XX DM tree as shown in Fig. 8. The detailed process is as follows.

Step 1: The management side requests user grant authorization for issuing a monitoring task to the device.

Step 2: The user authorizes the issue when monitoring is necessary. That is, the user permits the management side to issue the monitoring task.

Step 3: The management side issues the monitoring task to the terminal device, and installs it on the terminal device.

The monitoring task includes: a number of appointed monitored event items, which are usage information of applications in the terminal device. Please refer to the second embodiment for the details of the items.

Step 4: an offline event occurs in the terminal device.

Step 5: the terminal device monitors the occurrence of the event based on a desired monitored item and record the monitoring result through a corresponding node in the XX management tree.

Methods of querying application list, querying a system log or reporting by a firmware at the lower layer or by a system can be used to monitor the usage of an application.

Step 6: the management side acquires the monitoring result by querying and managing the terminal device based on the monitoring result.

It is clear from the embodiments that terminal events may be monitored and acquired by the present invention. Based on the acquired terminal event, the present invention performs management of the terminal device. Thus, the impact of terminal events on the terminal devices can be prevented and eliminated in a timely fashion, which reduces the probability of the occurrence of errors on the device, thus improving the service quality of the service provider.

In conclusion, while the presently preferred embodiments of the present invention have been taught and described, it is to be understood that this disclosure is for the purpose of illustration and that various changes and modifications may be made without departing from the scope of the invention as set forth in the appended claims. Therefore, the scope of protection of the present invention should be subject to the scope of protection of the claims.

## Claims

1. A method of managing a terminal device, comprising steps of:
receiving (1 and 2, Fig. 6), by the terminal device, a monitoring task from a management side based on a device management, DM, protocol, wherein the monitoring task is adapted to indicate the terminal device to monitor applications which are installed or updated on the terminal device via a non-DM mode;
installing (3, Fig.6), by the terminal device, the monitoring task to a DM tree in the terminal device for monitoring the terminal device under offline conditions;
acquiring (1, Fig. 9, and 1, Fig. 10), by the terminal device, original application information on the terminal device through querying and analyzing a list of system applications or system logs;
acquiring (2, Fig.9, and 2, Fig. 10), by the terminal device, current application information on the terminal device through querying and analyzing a current list of system applications or current system logs, and then removing from the acquired current application information the information on applications installed or updated via a DM mode;
comparing (3, Fig.9, and 3, Fig. 10), by the terminal device, the original application information with information of application installed or updated via the non-DM mode;
reporting (6, Fig. 6), by the terminal device, the information of applications installed or updated via the non-DM mode of the terminal device to the management side based on the DM protocol, after establishing communication with the management side; and
managing (7, Fig.6), by the management side, the terminal device based on said information of applications installed or updated via the non-DM mode of the terminal device.

2. The method according to claim 1, wherein the step of acquiring a monitored event comprises steps of:
receiving, by the management side, the monitored event reported by the terminal device, or initiatively acquiring, by the management side, event related information monitored by the terminal device.

3. The method according to claim 2, wherein the monitoring task comprises:
a plurality of appointed monitored event items; and/or recording conditions and strategies; and/or reporting conditions and strategies.

4. The method according to claim 2, wherein the receiving, by the management side, the monitored event reported by the terminal device comprises:
receiving (6) the monitored event by receiving an Alert message reported by the terminal device, the message carries URI of the management object relating to the occurred event, Alert type and the occurred event.

5. The method according to claim 4, wherein the managing of the terminal device based on the event comprises:
the management side acquires information on the installation, update or usage of applications in the terminal device based on the reported Alert message, records the Alert message, updates corresponding information of the management object in the, DM, Device Management tree based on the recorded message for later management; or
the management side acquires a value of the management object based on the reported Alert message, and updating the value of the corresponding management object in the terminal device with the acquired value, or
the management side acquires setting parameters reported by the terminal device based on the reported Alert message, determines a management policy for the occurred event base on a preset severity level of the setting parameters; the management side selecting appropriate parameters based on the determined management policy and issuing the appropriate parameters to the terminal device for remedying modified parameters.

6. The method according to claim 5, wherein the managing of the terminal device based on the event comprises:
the terminal device receiving the issued parameters from the management side and updating the modified parameters with the issued parameters.

7. A system for management of terminal a device, comprising:
a management side configured to communicate with the terminal device; wherein
the management side comprises a monitoring task management unit, configured to issue a monitoring task to the terminal device based on a Device Management, DM, protocol, wherein the monitoring task is adapted to indicate the terminal device to monitor applications which are installed or updated on the terminal device via a non-DM mode for preventing adverse impact of the events on the terminal device;
the terminal device is configured to carry out an allocation of the monitoring task to a DM tree in the terminal device for monitoring the terminal device under offline conditions; monitor and acquire original application information on the terminal device through querying and analyzing a list of system applications or system logs; monitor and acquire current application information on the terminal device through querying and analyzing a current list of system applications or current system logs, and then removing from the acquired current application information the information on applications installed or updated via DM mode; compare the original application information with information of applications installed or updated via the non-DM mode; record and report the information of applications installed or updated via the non-DM mode of the terminal device to the management side based on the DM protocol, after establishing communication with the management side; and
the management side is configured to manage the terminal device based on said information of applications installed or updated via the non-DM mode of the terminal device.

8. The system according to claim 7, wherein
the terminal device comprises a monitoring engine configured to receive the monitoring task issued from the management side, allocate the monitoring task and monitor and acquire the event occurring in the terminal device based on the allocated monitoring task.

9. The system according to claim 8, wherein
the monitoring engine further comprises an allocating unit configured to receive the monitoring task issued from the management side and allocate corresponding monitored items, record condition and report condition based on the monitoring task.

10. The system according to claim 9, wherein
the monitoring engine further comprises a monitoring unit and a report unit,
the monitoring unit monitors the event occurring in the terminal device based on the allocated monitored items and transmits the monitoring result to the report unit which reports the monitoring result to the management side based the allocated report condition.

11. The system according to claim 10, wherein
the monitoring engine further comprises a record unit configured to record the monitoring result from the monitoring unit based on the allocated record condition.

## Patentansprüche

1. Verfahren für das Management einer Endgerätvorrichtung, das die folgenden Schritte umfasst:
Empfangen (1 und 2, Fig. 6) durch die Endgerätvorrichtung einer Überwachungsaufgabe von einer Managementseite anhand eines Vorrichtungsmanagement-Protokolls, DM-Protokolls, wobei die Überwachungsaufgabe dafür ausgelegt ist, die Endgerätvorrichtung anzuweisen, Anwendungen, die in der Endgerätvorrichtung durch einen Nicht-DM-Modus installiert oder aktualisiert werden, zu überwachen;
Installieren (3, Fig. 6) durch die Endgerätvorrichtung der Überwachungsaufgabe in einem DM-Baum in der Endgerätvorrichtung, um die Endgerätvorrichtung unter Offline-Bedingungen zu überwachen;
Erfassen (1, Fig. 9 und 1, Fig. 10) durch die Endgerätvorrichtung ursprünglicher Anwendungsinformationen über die Endgerätvorrichtung durch Abfragen und Analysieren einer Liste von Systemanwendungen oder Systemprotokollen;
Erfassen (2, Fig. 9, und 2, Fig. 10) durch die Endgerätvorrichtung aktueller Anwendungsinformationen über die Endgerätvorrichtung durch Abfragen und
Analysieren einer aktuellen Liste von Systemanwendungen oder aktueller Systemprotokolle und dann Entfernen aus den erfassten aktuellen Anwendungsinformationen der Informationen über Anwendungen, die durch einen DM-Modus installiert oder aktualisiert worden sind;
Vergleichen (3, Fig. 9, und 3, Fig. 10) durch die Endgerätvorrichtung der ursprünglichen Anwendungsinformationen mit Informationen von Anwendungen, die durch den Nicht-DM-Modus installiert oder aktualisiert worden sind;
Berichten (6, Fig. 6) durch die Endgerätvorrichtung von Informationen von Anwendungen, die durch den Nicht-DM-Modus der Endgerätvorrichtung installiert oder aktualisiert worden sind, an die Managementseite anhand des DM-Protokolls, nachdem eine Kommunikation mit der Managementseite aufgebaut worden ist; und
Managen (7, Fig. 6) durch die Managementseite der Endgerätvorrichtung anhand von Informationen von Anwendungen, die durch den Nicht-DM-Modus der Endgerätvorrichtung installiert oder aktualisiert worden sind.

2. Verfahren nach Anspruch 1, wobei der Schritt des Erfassens eines überwachten Ereignisses die folgenden Schritte umfasst:
Empfangen durch die Managementseite des überwachten Ereignisses, das durch die Endgerätvorrichtung berichtet wird, oder anfängliches Erfassen durch die Managementseite von ereignisbezogenen Informationen, die durch die Endgerätvorrichtung überwacht werden.

3. Verfahren nach Anspruch 2, wobei die Überwachungsaufgabe Folgendes umfasst:
mehrere festgelegte überwachte Ereigniselemente; und/oder Aufzeichnen von Bedingungen und Strategien und/oder Berichten von Bedingungen und Strategien.

4. Verfahren nach Anspruch 2, wobei das Empfangen durch die Managementseite des überwachten Ereignisses, das durch die Endgerätvorrichtung berichtet wird, Folgendes umfasst:
Empfangen (6) des überwachten Ereignisses durch Empfangen einer Warnnachricht, die durch die Endgerätvorrichtung berichtet wird, wobei die Nachricht die URI des Managementobjekts, die mit dem aufgetretenen Ereignis in Beziehung steht, den Wamtyp und das aufgetretene Ereignis führt.

5. Verfahren nach Anspruch 4, wobei das Management der Endgerätvorrichtung anhand des Ereignisses Folgendes umfasst:
die Managementseite erfasst Informationen über die Installation, die Aktualisierung oder die Nutzung von Anwendungen in der Endgerätvorrichtung anhand der berichteten Warnnachricht, zeichnet die Wamnachricht auf, aktualisiert entsprechende Informationen des Managementobjekts in dem Vorrichtungsmanagement-Baum, DM-Baum, anhand der aufgezeichneten Nachricht für ein späteres Management; oder
die Managementseite erfasst einen Wert des Managementobjekts anhand der berichteten Wamnachricht und aktualisiert den Wert des entsprechenden Managementobjekts in der Endgerätvorrichtung mit dem erfassten Wert oder
die Managementseite erfasst Einstellparameter, die durch die Endgerätvorrichtung berichtet werden, anhand der berichteten Warnnachricht, bestimmt eine Managementstrategie des aufgetretenen Ereignisses anhand eines im Voraus festgelegten Bewertungsgrades der Einstellparameter; wobei die Managementseite geeignete Parameter anhand der bestimmten Managementstrategie auswählt und die geeigneten Parameter an die Endgerätvorrichtung ausgibt, um modifizierte Parameter zu berichtigen.

6. Verfahren nach Anspruch 5, wobei das Managen der Endgerätvorrichtung anhand des Ereignisses Folgendes umfasst: die Endgerätvorrichtung empfängt die ausgegebenen Parameter von der Managementseite und aktualisiert die modifizierten Parameter mit den ausgegebenen Parametern.

7. System für das Management einer Endgerätvorrichtung, das Folgendes umfasst:
eine Managementseite, die konfiguriert ist, mit der Endgerätvorrichtung zu kommunizieren; wobei
die Managementseite eine Überwachungsaufgaben-Managementeinheit umfasst, die konfiguriert ist, eine Überwachungsaufgabe an die Endgerätvorrichtung anhand eines Vorrichtungsmanagement-Protokolls, DM-Protokolls, auszugeben, wobei die Überwachungsaufgabe dafür ausgelegt ist, die Endgerätvorrichtung anzuweisen, Anwendungen, die in der Endgerätvorrichtung durch einen Nicht-DM-Modus installiert oder aktualisiert werden, zu überwachen, um einen nachteiligen Einfluss auf die Ereignisse in der Endgerätvorrichtung zu verhindern;
die Endgerätvorrichtung konfiguriert ist, eine Zuweisung der Überwachungsaufgabe an einen DM-Baum in der Endgerätvorrichtung auszuführen, um die Endgerätvorrichtung unter Offline-Bedingungen zu überwachen; ursprüngliche Anwendungsinformationen über die Endgerätvorrichtung durch Abfragen und Analysieren einer Liste von Systemanwendungen oder Systemprotokollen zu überwachen und zu erfassen; aktuelle Anwendungsinformationen über die Endgerätvorrichtung durch Abfragen und Analysieren einer aktuellen Liste von Systemanwendungen oder aktuellen Systemprotokollen zu überwachen und zu erfassen und dann aus den erfassten aktuellen Anwendungsinformationen die Informationen über Anwendungen, die durch einen DM-Modus installiert oder
aktualisiert worden sind, zu entfernen, die ursprünglichen Anwendungsinformationen mit Informationen von Anwendungen, die durch den Nicht-DM-Modus installiert oder aktualisiert worden sind, zu vergleichen; die Informationen von Anwendungen, die durch den Nicht-DM-Modus der Endgerätvorrichtung installiert oder aktualisiert worden sind, aufzuzeichnen und der Managementseite anhand des DM-Protokolls zu berichten, nachdem eine Kommunikation mit der Managementseite aufgebaut worden ist; und
die Managementseite konfiguriert ist, die Endgerätvorrichtung anhand von Informationen von Anwendungen, die durch den Nicht-DM-Modus der Endgerätvorrichtung installiert oder aktualisiert worden sind, zu managen.

8. System nach Anspruch 7, wobei
die Endgerätvorrichtung eine Überwachungsmaschine umfasst, die konfiguriert ist, die Überwachungsaufgabe, die von der Managementseite ausgegeben worden ist, zu empfangen, die Überwachungsaufgabe zuzuweisen und das Ereignis, das in der Endgerätvorrichtung auftritt, anhand der zugewiesenen Überwachungsaufgabe zu überwachen und zu erfassen.

9. System nach Anspruch 8, wobei
die Überwachungsmaschine ferner eine Zuweisungseinheit umfasst, die konfiguriert ist, die Überwachungsaufgabe, die von der Managementseite ausgegeben wird, zu empfangen und entsprechende Überwachungselemente, eine Aufzeichnungsbedingung und eine Berichtsbedingung anhand der Überwachungsaufgabe zuzuweisen.

10. System nach Anspruch 9, wobei
die Überwachungsmaschine ferner eine Überwachungseinheit und eine Berichtseinheit umfasst,
wobei die Überwachungseinheit das Ereignis, das in der Endgerätvorrichtung auftritt, anhand der zugewiesenen überwachten Elemente überwacht und das Überwachungsergebnis zu der Berichtseinheit sendet, die das Überwachungsergebnis anhand der zugewiesenen Berichtsbedingung an die Managementseite berichtet.

11. System nach Anspruch 10, wobei
die Überwachungsmaschine ferner eine Aufzeichnungseinheit umfasst, die konfiguriert ist, das Überwachungsergebnis von der Überwachungseinheit anhand der zugewiesenen Aufzeichnungsbedingung aufzuzeichnen.

## Revendications

1. Procédé de gestion d'un dispositif terminal, comprenant les étapes suivantes :
la réception (1 et 2, figure 6), par le dispositif terminal, d'une tâche de surveillance d'un côté gestion sur la base d'un protocole de gestion de dispositifs, DM (Device Management), la tâche de surveillance étant conçue pour indiquer au dispositif terminal de surveiller les applications qui sont installées ou mises à jour sur le dispositif terminal par l'intermédiaire d'un mode non-DM ;
l'installation (3, figure 6), par le dispositif terminal, de la tâche de surveillance dans un arbre DM dans le dispositif terminal afin de surveiller le dispositif terminal dans des conditions hors ligne ;
l'acquisition (1, figure 9 et 1, figure 10), par le dispositif terminal, d'informations d'applications initiales sur le dispositif terminal par interrogation et analyse d'une liste d'applications système ou de journaux système ;
l'acquisition (2, figure 9 et 2, figure 10), par le dispositif terminal, d'informations d'applications courantes sur le dispositif terminal par interrogation et analyse d'une liste courante d'applications système ou de journaux système courants, puis l'élimination, parmi les informations d'applications courantes acquises des informations concernant les applications installées ou mises à jour par l'intermédiaire d'un mode DM ;
la comparaison (3, figure 9 et 3, figure 10), par le dispositif terminal, des informations d'applications initiales à des informations d'applications installées ou mises à jour par l'intermédiaire du mode non-DM ;
le signalement (6, figure 6) au côté gestion, par le dispositif terminal, des informations d'applications installées ou mises à jour par l'intermédiaire du mode non-DM du dispositif terminal sur la base du protocole DM, après établissement d'une communication avec le côté gestion ; et
la gestion (7, figure 6), par le côté gestion, du dispositif terminal sur la base desdites informations d'applications installées ou mises à jour par l'intermédiaire du mode non-DM du dispositif terminal.

2. Procédé selon la revendication 1, dans lequel l'étape d'acquisition d'un événement surveillé comprend les étapes suivantes :
la réception, par le côté gestion, de l'événement surveillé signalé par le dispositif terminal, ou l'acquisition à titre d'initiative, par le côté gestion, d'informations liées à l'événement et surveillées par le dispositif terminal.

3. Procédé selon la revendication 2, dans lequel la tâche de surveillance comprend :
une pluralité d'éléments d'événements surveillés et désignés ; et/ou des conditions et des stratégies d' enregistrement ; et/ou des conditions et des stratégies de signalement.

4. Procédé selon la revendication 2, dans lequel la réception, par le côté gestion, de l'événement surveillé signalé par le dispositif terminal comprend :
la réception (6) de l'événement surveillé par réception d'un message d'Alerte signalé par le dispositif terminal, le message acheminant un identifiant URI (Uniform Resource Identifier) de l'objet de gestion lié à l'événement s'étant produit, le type d'Alerte et l'événement s'étant produit.

5. Procédé selon la revendication 4, dans lequel la gestion du dispositif terminal sur la base de l'événement comprend ce qui suit :
le côté gestion acquiert des informations concernant l'installation, la mise à jour ou l'utilisation d'applications dans le dispositif terminal sur la base du message d'Alerte signalé, enregistre le message d'Alerte, met à jour des informations correspondantes de l'objet de gestion dans l'arbre de Gestion de Dispositifs, DM, sur la base du message enregistré en vue d'une gestion ultérieure ; ou
le côté gestion acquiert une valeur de l'objet de gestion sur la base du message d'Alerte signalé, et met à jour conformément à la valeur acquise la valeur de l'objet de gestion correspondant dans le dispositif terminal, ou
le côté gestion acquiert des paramètres de réglage signalés par le dispositif terminal sur la base du message d'Alerte signalé, détermine une politique de gestion pour l'événement s'étant produit sur la base d'un niveau de gravité prédéfini des paramètres de réglage ; le côté gestion sélectionnant des paramètres appropriés sur la base de la politique de gestion déterminée et envoyant les paramètres appropriés au dispositif terminal pour corriger les paramètres modifiés.

6. Procédé selon la revendication 5, dans lequel la gestion du dispositif terminal sur la base de l'événement comprend le fait que :
le dispositif terminal reçoit les paramètres envoyés par le côté gestion et met à jour les paramètres modifiés conformément aux paramètres envoyés.

7. Système de gestion d'un dispositif terminal, comprenant :
un côté gestion configuré pour communiquer avec le dispositif terminal ; dans lequel le côté gestion comprend une unité de gestion de tâche de surveillance, configurée pour envoyer une tâche de surveillance au dispositif terminal sur la base d'un protocole de Gestion de Dispositifs, DM, la tâche de surveillance étant conçue pour indiquer au dispositif terminal de surveiller les applications qui sont installées ou mises à jour sur le dispositif terminal par l'intermédiaire d'un mode non-DM pour éviter un effet défavorable des événements sur le dispositif terminal ;
le dispositif terminal est configuré pour effectuer une allocation de la tâche de surveillance à un arbre DM dans le dispositif terminal afin de surveiller le dispositif terminal dans des conditions hors ligne ; surveiller et acquérir des informations d'applications initiales sur le dispositif terminal par interrogation et analyse d'une liste d'applications système ou de journaux système ; surveiller et acquérir des informations d'applications courantes sur le dispositif terminal par interrogation et analyse d'une liste courante d'applications système ou de journaux système courants, puis éliminer parmi les informations d'applications courantes acquises les informations concernant les applications installées ou mises à jour par l'intermédiaire d'un mode DM ;
comparer les informations d'applications initiales à des informations d'applications installées ou mises à jour par l'intermédiaire du mode non-DM ; enregistrer et signaler au côté gestion les informations d'applications installées ou mises à jour par l'intermédiaire du mode non-DM du dispositif terminal sur la base du protocole DM, après établissement d'une communication avec le côté gestion ; et
le côté gestion est configuré pour gérer le dispositif terminal sur la base desdites informations d'applications installées ou mises à jour par l'intermédiaire du mode non-DM du dispositif terminal.

8. Système selon la revendication 7, dans lequel
le dispositif terminal comprend un moteur de surveillance configuré pour recevoir la tâche de surveillance envoyée par le côté gestion, allouer la tâche de surveillance et surveiller et acquérir l'événement se produisant dans le dispositif terminal sur la base de la tâche de surveillance allouée.

9. Système selon la revendication 8, dans lequel
le moteur de surveillance comprend en outre une unité d'allocation configurée pour recevoir la tâche de surveillance envoyée par le côté gestion et allouer des éléments surveillés, une condition d'enregistrement et une condition de signalement correspondants sur la base de la tâche de surveillance.

10. Système selon la revendication 9, dans lequel
le moteur de surveillance comprend en outre une unité de surveillance et une unité de signalement,
l'unité de surveillance surveille l'événement se produisant dans le dispositif terminal sur la base des éléments surveillés alloués et transmet le résultat de la surveillance à l'unité de signalement qui signale le résultat de la surveillance au côté gestion sur la base de la condition de signalement allouée.

11. Système selon la revendication 10, dans lequel
le moteur de surveillance comprend en outre une unité d'enregistrement configurée pour enregistrer le résultat de la surveillance provenant de l'unité de surveillance sur la base de la condition d'enregistrement allouée.
